(19) Europäisches Patentamt
European Patent Office
Office européen des brevets

(11) **EP 4 727 121 A1**

(12) **EUROPEAN PATENT APPLICATION**

(43) Date of publication:
**15.04.2026 Bulletin 2026/16**

(21) Application number: **24306649.5**

(22) Date of filing: **08.10.2024**

(51) International Patent Classification (IPC):
*H04N 19/119* (2014.01)    *H04N 19/12* (2014.01)
*H04N 19/122* (2014.01)    *H04N 19/176* (2014.01)

(52) Cooperative Patent Classification (CPC):
**H04N 19/176; H04N 19/119; H04N 19/12;
H04N 19/122**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
  MONTREAL, H2J 1G1 (CA)**
• **PURI, Saurabh
  SAINT-LAZARE, J7T 0P6 (CA)**
• **LE LEANNEC, Fabrice
  35830 BETTON (FR)**
• **NASER, Karam
  35250 MOUAZE (FR)**

(74) Representative: **Interdigital
Immeuble ZEN 2
845 A, avenue des Champs Blancs
35510 Cesson-Sévigné (FR)**

(54) **IMPLICIT MULTIPLE TRANSFORM SELECTION (MTS) FOR ISP CODED BLOCKS**

(57) A method of decoding is disclosed. It is determined that a current block is an intra sub-partition (ISP) coded block. At least one transform pair is selected for the current block from a plurality of transform pairs for the current block responsive to the determining. The current block is then decoded based on the selected at least one transform pair.

```
┌─────────────────────────────────────────────────────────────────┐
│  Determine that a current block is an intra sub-partition (ISP)   │  810
│  coded block                                                       │
└─────────────────────────────────────────────────────────────────┘
                              │
                              ▼
┌─────────────────────────────────────────────────────────────────┐
│  Select at least one transform pair from a plurality of transform  │  820
│  pairs for the current block responsive to the determining         │
└─────────────────────────────────────────────────────────────────┘
                              │
                              ▼
┌─────────────────────────────────────────────────────────────────┐
│  Decode the current block based on the selected at least one       │  830
│  transform pair                                                    │
└─────────────────────────────────────────────────────────────────┘
```

# FIG. 8

EP 4 727 121 A1

## Description

### BACKGROUND

The present application is related to image and video coding schemes. Such schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### BRIEF SUMMARY

Briefly stated, in one embodiment, a method of decoding is disclosed. It is determined that a current block is an intra sub-partition (ISP) coded block. At least one transform pair is selected for the current block from a plurality of transform pairs for the current block responsive to the determining. The current block is decoded based on the selected at least one transform pair.
An encoding method is also disclosed, wherein the current block is decoded based on the selected at least one transform pair. Corresponding encoding and decoding apparatuses are also disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates that the ISP (Intra Sub-Partition) tool divides luma intra-predicted blocks vertically or horizontally into 2 sub-partitions depending on the block size dimension;
FIG. 5 illustrates that the ISP (Intra Sub-Partition) tool divides luma intra-predicted blocks vertically or horizontally into 4 sub-partitions depending on the block size dimension;
FIG. 6 illustrates an example of transform set selection in the Look Up Table (LUT) for a given TU size and intra mode ;
FIG. 7 is a block diagram illustrating an example of a process of mode-wise implicit MTS using mode-wise LUT according to an embodiment;
FIGs 8 to 11 are block diagrams illustrating examples of a process of mode-wise implicit MTS according to one or more embodiments;
FIG. 12 illustrates an example of position dependent transform selection for vertical ISP mode;
FIG. 13 illustrates an example of position dependent transform selection for horizontal ISP mode;
FIG. 14 illustrates an example of position dependent LUT size index adaptation for vertical ISP mode; and
FIG. 15 illustrates an example of position dependent LUT size index adaptation for horizontal ISP mode.

### DETAILED DESCRIPTION

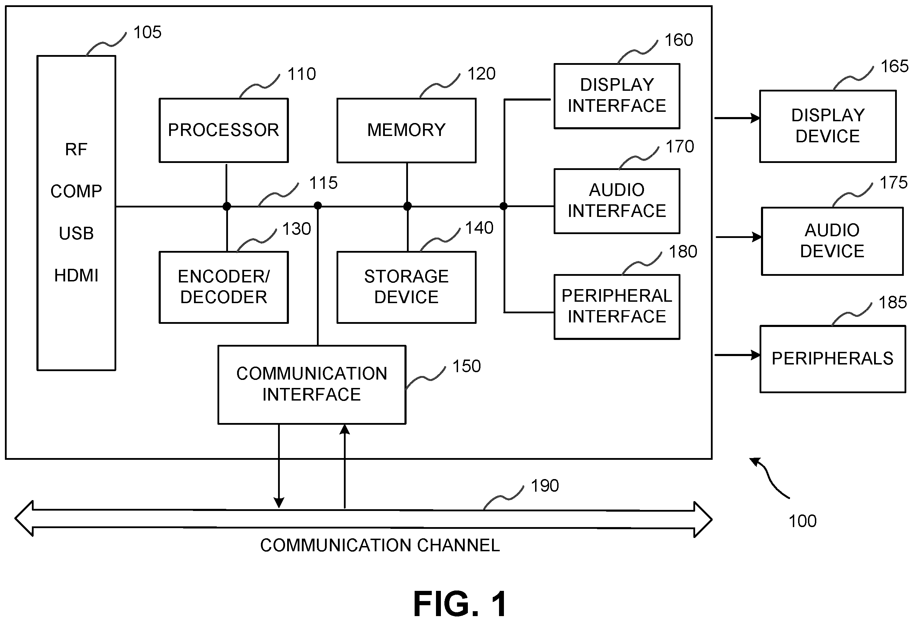

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

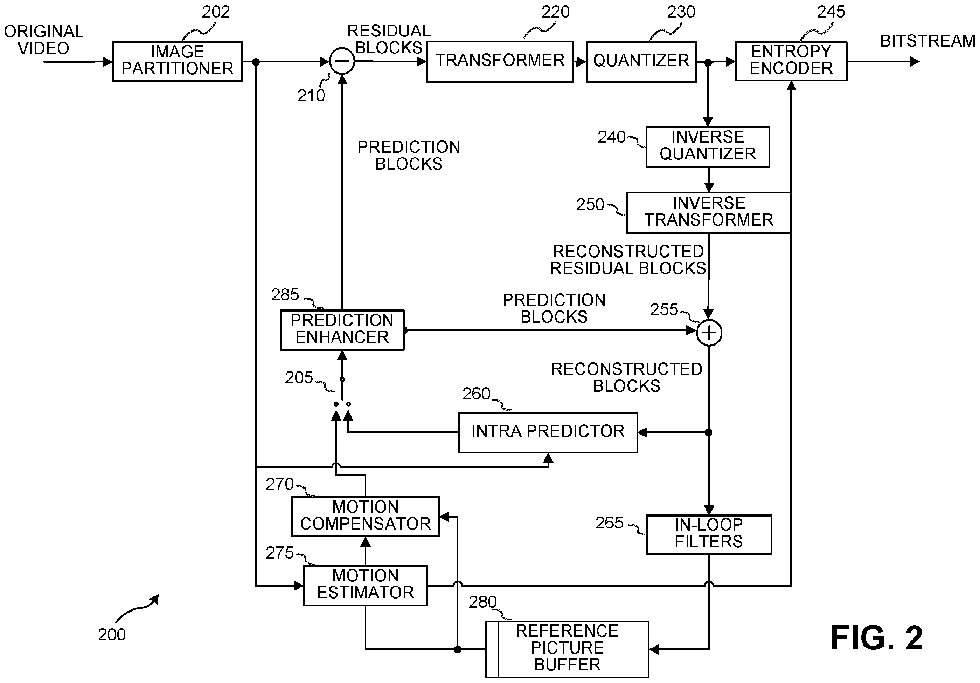

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

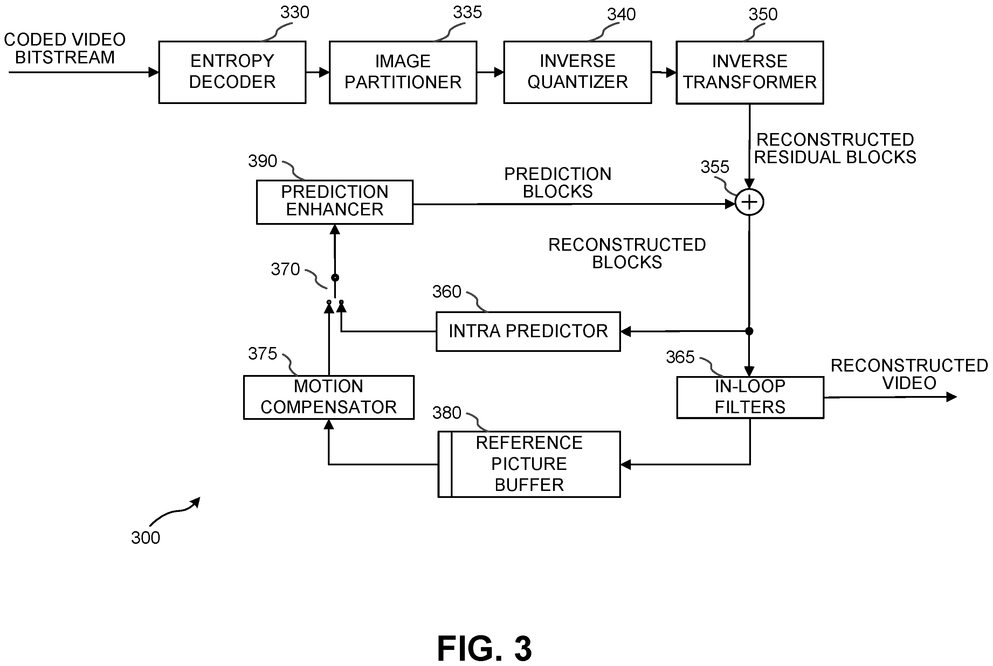

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are dequantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

To capture the arbitrary edge directions presented in natural video, ECM features 65 directional intra prediction modes as in VVC. For predicting blocks with smoothly varying textures, VVC uses the PLANAR and DC modes. These 67 core intra prediction modes apply for all block sizes and in both luma and chroma intra predictions.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

When DIMD (Decoder Side Intra Mode Derivation) is applied, up to five intra modes are derived from the reconstructed neighbor samples, and those five predictors are combined with the planar mode predictor with weights derived from the histogram of gradients.

In Intra Block Copy (IBC), the prediction is obtained from a reference block within the same picture indicated by a block vector.

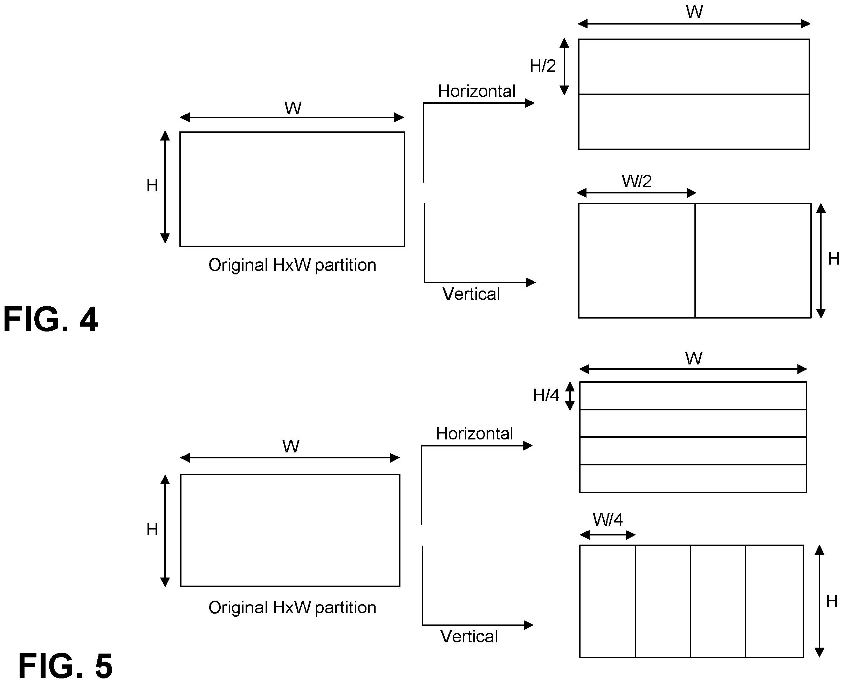

A CU may be used for prediction and transform processing without any further partitioning except in some special cases. For example, when Intra sub-partition (ISP) is enabled, an intra CU may contain multiple TUs (Transform Units). The intra sub-partitions (ISP) may divide luma intra-predicted blocks vertically or horizontally into a plurality of sub-partitions (e.g., into 2 or 4 sub-partitions), e.g., depending on the block size. For example, minimum block size for ISP may be 4x8 (or 8x4). If/when block size is greater than 4x8 (or 8x4) then the corresponding block may be divided into 4 sub-partitions. ISP blocks of size $M \times 128$ (with $M \leq 64$) and $128 \times N$ (with $N \leq 64$) may generate a potential issue with a $64 \times 64$ VDPU (acronym of Virtual Decoder Pipeline Unit). For example, an $M \times 128$ CU in a single tree case has an $M \times 128$ luma TB and two corresponding $M/2 \times 64$ chroma TBs. If the CU uses ISP, then the luma TB may be divided into four $M \times 32$ TBs (e.g., only the horizontal split is possible), each of them smaller than a $64 \times 64$ block. However, in a current design of ISP chroma blocks are not divided. Therefore, both chroma components may have a size greater than a $32 \times 32$ block. Analogously, a similar situation may occur with a CU of size $128 \times N$ using ISP. Hence, these two cases are an issue for a decoder using 64x64 VPDU. FIG. 4 shows possible sub-partitions for 4x8 and 8x4 CUs and FIG. 5 shows possible sub-partitions for 4x8 and 8x4 CUs. All sub-partitions fulfill the condition of having at least 16 samples.

In ISP, the dependence of 1xN/2xN subblock prediction on the reconstructed values of previously decoded 1xN/2xN subblocks of the coding block is not allowed so that the minimum width of prediction for subblocks becomes four samples. For example, an 8xN (N > 4) coding block that is coded using ISP with vertical split is split into two prediction regions each of size 4xN and four transforms of size 2xN. Also, a 4xN coding block that is coded using ISP with vertical split is predicted using the full 4xN block; four transform each of 1xN is used. Although the transform sizes of 1xN and 2xN are allowed, it is asserted that the transform of these blocks in 4xN regions can be performed in parallel. For example, when a 4xN prediction region contains four 1xN transforms, there is no transform in the horizontal direction; the transform in the vertical direction can be performed as a single 4xN transform in the vertical direction. Similarly, when a 4xN prediction region contains two 2xN transform blocks, the transform operation of the two 2xN blocks in each direction (horizontal and vertical) can be conducted in parallel. Thus, there is no delay added in processing these smaller blocks than processing 4x4 regular-coded intra blocks.

For each sub-partition, reconstructed samples are obtained by adding the residual signal to the prediction signal. Here, a residual signal is generated by the processes such as entropy decoding, inverse quantization and inverse transform. Therefore, the reconstructed sample values of each sub-partition are available to generate the prediction of the next sub-partition, and each sub-partition is processed repeatedly. In addition, the first sub-partition to be processed is the one containing the top-left sample of the CU and then continuing downwards (horizontal split) or rightwards (vertical split). As a result, reference samples used to generate the sub-partitions prediction signals are only located at the left and above sides of the lines. All sub-partitions of a same CU share the same intra mode. The followings are summary of interaction of ISP with other coding tools.

Multiple Reference Line (MRL)

In an example, if a block has an MRL index other than 0, then the ISP coding mode may be inferred to be 0. In this case, ISP mode information will not be signaled (e.g., sent to the decoder).

Entropy coding coefficient group size

The sizes of the entropy coding subblocks may be modified so that they have 16 samples in all possible cases, as shown in Table 1. The new sizes may only affect blocks produced by ISP in which one of the dimensions is less than 4 samples. In all other cases coefficient groups may keep the $4 \times 4$ dimensions.

**Table 1 - Entropy coding coefficient group size**

| Block Size | Coefficient group Size |
|---|---|
| $1 \times N, N \geq 16$ | $1 \times 16$ |
| $N \times 1, N \geq 16$ | $16 \times 1$ |
| $2 \times N, N \geq 8$ | $2 \times 8$ |
| $N \times 2, N \geq 8$ | $8 \times 2$ |
| All other possible $M \times N$ cases | $4 \times 4$ |

CBF coding

it is assumed to have at least one of the sub-partitions has a non-zero CBF. Hence, if n is the number of sub-partitions and the first n-1 sub-partitions have produced a zero CBF, then the CBF of the n-th sub-partition is inferred to be 1.

Transform size restriction

In an example, all ISP transforms with a length larger than 16 points may use the DCT-II.

MTS flag

If a CU uses the ISP coding mode, the MTS CU flag may be set to 0. In this case, it will not be signaled (e.g., sent to the decoder). Therefore, the encoder will not perform RD tests for the different available transforms for each resulting sub-partition. The transform choice for the ISP mode may instead be fixed and selected according to a shape of the block, the processing order and the block size utilized. Hence, no signalling is required. For example, let $t_H$ and $t_V$ be the horizontal and the vertical transforms selected respectively for the $w \times h$ sub-partition, where $w$ is the width and $h$ is the height. Then the transform may be selected as follows :

- If $w = 1$ or $h = 1$, then there is no horizontal or vertical transform respectively.
- If $w \geq 4$ and $w \leq 16$, $t_H$ = DST-VII, otherwise, $t_H$ = DCT-II
- If $h \geq 4$ and $h \leq 16$, $t_V$ = DST-VII, otherwise, $t_V$ = DCT-II

In ISP mode, all 67 intra modes may be allowed. PDPC may also applied if corresponding width and height is at least 4 samples long. In addition, the reference sample filtering process (reference smoothing) and the condition for intra interpolation filter selection does not exist anymore, and Cubic (DCT-IF) filter may (e.g., may always) be applied for fractional position interpolation in ISP mode.

**Explicit MTS**

In the VVC design, DST7 and DCT8 transform kernels may be used in addition to DCT2. These kernels are used for intra and inter coding. Transform skip may also be used. In particular, in addition to the conventional type-2 DCT (DCT-2), alternate transform types, type-7 DST (DST7) and type-8 DCT (DCT8), are employed in VVC. In VVC, the primary transforms are specified as separable transforms. Five different transform pairs are supported, including (DCT2, DCT2) and four MTS (Multiple Transform Selection) mode combinations, i.e., (DST7, DST7), (DST7, DCT8), (DCT8, DST7) and (DCT8, DCT8). Note the "transform pair" refers to a pair of horizontal transform and vertical transform. The combination between DCT2 and DST7 (or DCT8) is not supported in VVC.

In VVC, there are two variants of MTS, called explicit MTS and implicit MTS. The explicit MTS can be applied to both intra and inter coded blocks, while the implicit MTS can be only used for intra coded blocks. In explicit MTS, the choice of DST-7/DCT-8 is indicated by explicit signaling of the transform type. In implicit MTS, the transform type is selected based on coded information that is known to both the encoder and decoder, and transform type signalling is not needed.

In ECM, additional primary transforms including DCT5, DST4, DST1, and identity transform (IDT) are employed. Also, MTS sets are made dependent on the TU size and intra mode information. For blocks predicted using the IntraTMP mode, the DIMD process is used on the prediction block to derive an intra mode that is used for transform selection. Specifically, a horizontal gradient and a vertical gradient are calculated for each predicted sample to build a Histogram of Gradients (HoG). Then the intra prediction mode with the largest histogram amplitude values is used to determine the MTS transform pair set (a set of possible transform pairs).

The ECM explicit intra MTS LUT considers 16 different TU sizes, and for each TU size, 5 different classes are considered depending on intra mode information. For each class, 1, 4 or 6 different transform pairs are considered. The number of intra MTS candidates is adaptively selected (between 1, 4 and 6 MTS candidates) depending on the sum of absolute value of transform coefficients. The sum is compared against the two fixed thresholds to determine the total number of allowed MTS candidates:

$$\text{total number of allowed MTS candidates} = \begin{cases} 1, \text{if sum} \leq \text{th0} \\ 4, \text{if th0} < \text{sum} \leq \text{th1} \\ 6, \text{if sum} > \text{th1} \end{cases}$$

The transform pair index (e.g., mts_idx) in the set is sent to the decoder using one, two or three bits depending on if the number of transform candidates is 1, 4 or 6, respectively.

Although a total of 80 (16 transform sizes times 5 classes) different classes are considered, some of these classes may share a same transform pair set. In ECM, there are 58 (less than 80) unique entries in the resultant look-up table (LUT).

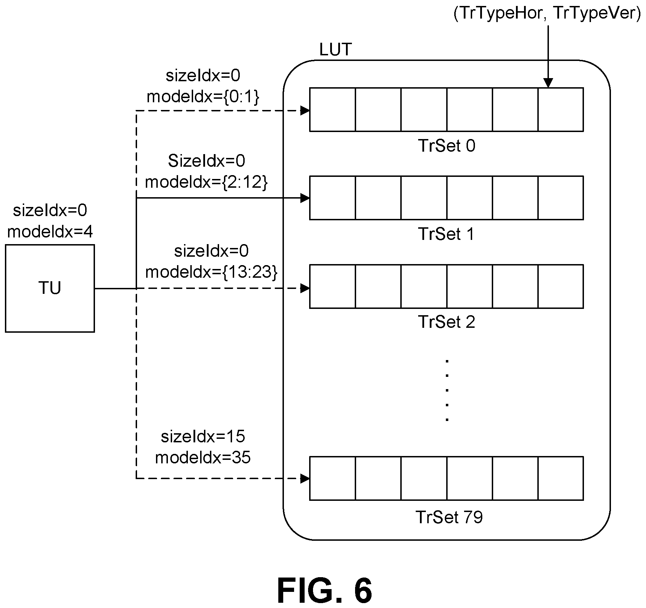

For angular intra modes, a joint symmetry over the TU shape and intra prediction mode is considered. Particularly, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP (Matrix-based Intra-picture Prediction), resulting in a total of 36 possible modes entries in the LUT. An example of transform set selection in the LUT for a given TU size and intra mode (modeIdx = 4, sizeIdx = 0) is illustrated in **FIG. 6.**

IDT may be applied for blocks that are 16x16 or smaller and have intra modes within the proximity of horizontal and vertical intra directions, where the proximity is defined by a threshold that depends on the block size. If the transform index is equal to 3 and the block satisfies the above condition, the horizontal and/or vertical identity transform is applied.

**Implicit MTS**

Implicit MTS is a tool in VVC that is a simpler version (e.g., faster) of the explicit MTS where a single pair of horizontal and vertical transforms is considered (e.g., tested) instead of multiple transform pairs. The benefits of the implicit MTS mode are its rapidity in an encoder compared to the explicit MTS mode (since a single transform pair is directly inferred), and its high compression gain when compared with the case where MTS is switched off.

In ECM, Implicit MTS is implemented by only considering DCT2 and DTS7 transform as in VVC. Specifically, if the block height or width is between 4 and 16, the vertical or horizontal transform is set to DST7, respectively. Otherwise DCT2 is selected.

$$trTypeHor = ( nTbW \geq 4 \ \&\& \ nTbW \leq 16 ) ? DST7 : DCT2$$
$$trTypeVer = ( nTbH \geq 4 \ \&\& \ nTbH \leq 16 ) ? DST7 : DCT2$$

In the following, this method may be referred to as default implicit MTS.

**Mode-wise LUT based Implicit MTS**

As described above, in ECM, four new primary transforms, namely DCT5, DST4, DST1, and IDTR, are added to MTS, which was limited to DCT8 and DST7 in VVC. Although bringing a rate-distortion gain, introducing new transforms increases the encoder complexity as additional tests may be required during the rate-distortion optimization loop. To overcome this, implicit MTS can be employed where the best transform may be inferred (e.g., selected/derived) based on information known on the decoder side. However, introducing new transforms increases the solution space and makes implicit MTS more challenging compared to explicit MTS, where the best transform pair is signaled to the decoder. To improve the performance of implicit MTS, we propose an implicit MTS method based on a mode-wise lookup table (LUT). This LUT infers the best transform pair for a given block from its intra prediction mode and (directly or indirectly) TU size. In an example, the LUT infers the best transform pair for a given block from its intra prediction mode and a size index (e.g., sizeIdx), wherein the size index is itself derived by mapping the size of the block (e.g., TU size) to an index using a table mapping block sizes to size indices.

The LUT may be trained offline using statistics collected, e.g., from an exhaustive search on transforms performed in the encoder. This approach offers a flexible distribution of transform pairs between consecutive modes and allows combinations of other transforms with DCT2, which are not considered in the current ECM explicit MTS LUT. The LUT design method may be applied to both the encoder and decoder.

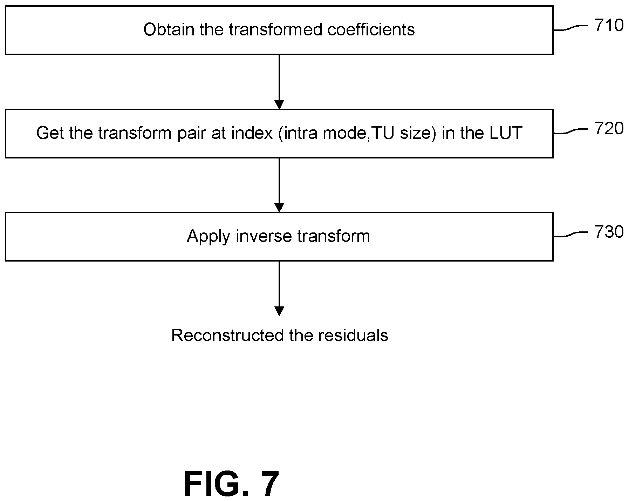

FIG. 7 illustrates is a block diagram illustrating an example of a process (e.g., a decoder side process) of implicit MTS using mode-wise LUT according to an embodiment.

The proposed mode-wise LUT assigns a (e.g., single) transform pair per block based on its intra prediction mode and TU size. This way, by assigning different transform pairs for consecutive intra modes, the proposed LUT introduces diversity in the search space while avoiding the need for a transform selection process. Intra prediction modes may include planar, DC, MIP, angular modes, and wide angles. A fixed range of TU sizes is considered (e.g., 4 < width < 32 and 4 < height < 32).

In particular, transformed coefficients are obtained (710) and the transform pair is inferred (720) from the LUT using the intra prediction mode and the TU size of the residual block (or a from a size index derived from the TU size). Then, inverse transform is performed (730) on the transform coded block using the corresponding transform pair to reconstruct the residual block.

On the encoder side, the transform pair is inferred from the LUT using the intra prediction mode and the TU size of the residual block. Then, the corresponding transform pair is applied to the residual block to produce the transformed residual block. Since the same intra prediction mode and TU size are known at the encoder and decoder, the same transform pair can be determined based solely on the intra prediction mode and the TU size in the same manner at the encoder and decoder, and no signaling overhead is required for conveying the transform pair information from the encoder to decoder.

In a variant, only the TU size is used to derive the transform pair in the LUT. Alternatively, only the intra prediction mode is used to derive the transform pair in the LUT.

In the ECM, TIMD (Template-based Intra Mode Derivation) may be used to derive an intra prediction mode from already coded samples. The original purpose of this tool is to offer the option to avoid signaling the intra mode to the decoder. In an example, for ISP mode, mode-wise LUT based implicit MTS is enabled (e.g., only enable) for regular directional intra prediction modes and disabled for special intra modes, such as for example TIMD. For the special intra modes, the default implicit MTS method may be used.

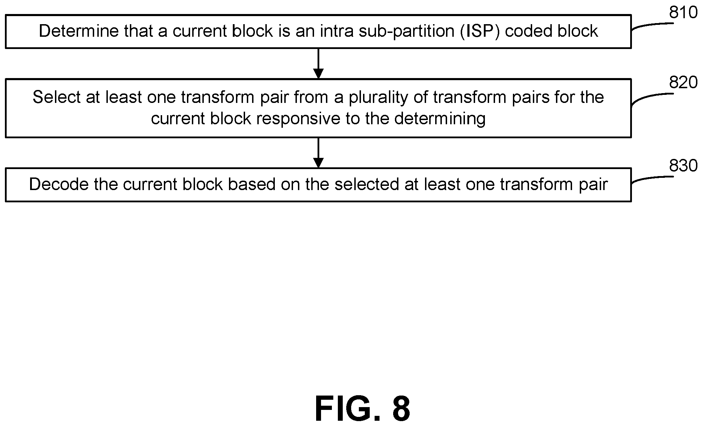

FIG. 8 is a block diagram illustrating an example of a process (e.g., a decoder-side process) of mode-wise implicit MTS according to one embodiment. In this embodiment, it is proposed to adapt the implicit MTS lookup-table to the case of ISP blocks. In an example, the implicit MTS lookup-table maps a single transform pair to a (e.g., each) couple (intra mode, TU size) or (intra mode, size index).

In particular, it is determined that a current block is an intra sub-partition (ISP) coded block (810). At least one transform pair is inferred (e.g., selected or derived) (820), for the current block, from a plurality of transform pairs responsive to the determining. In an example, the at least one transform pair ($T_{hor}$ and $T_{ver}$) is inferred (e.g., selected) using the intra prediction mode and the TU size of the current block. The sub-partition size may be the same as the TU size.

In another example, the at least one transform pair ($T_{hor}$ and $T_{ver}$) is inferred (e.g., selected) using the intra prediction mode and a size index (e.g., sizeIdx), wherein the size index is itself derived by mapping the size of the block (e.g., TU size) to an index using a table mapping block sizes to size indices such as Table 2.

**Table 2**

| Block size | 4x4 | 4x8 | 4x16 | 4x32 | 8x4 | 8x8 | 8x16 | 8x32 |
|---|---|---|---|---|---|---|---|---|
| *sizeIdx* | 0 | 1 | 2 | 3 | 4 | 5 | 6 | 7 |
| Block size | 16x4 | 16x8 | 16x16 | 16x32 | 32x4 | 32x8 | 32x16 | 32x32 |
| *sizeIdx* | 8 | 9 | 10 | 11 | 12 | 13 | 14 | 15 |

The current block is then decoded based on the selected at least one transform pair (830). In an example, transform coefficients of the current block are inverse transformed based on the selected transform pair to obtain (reconstruct) residuals. The same transform pair may be applied on all sub-partitions of the current block. The current block is decoded (reconstructed) based on the residuals.

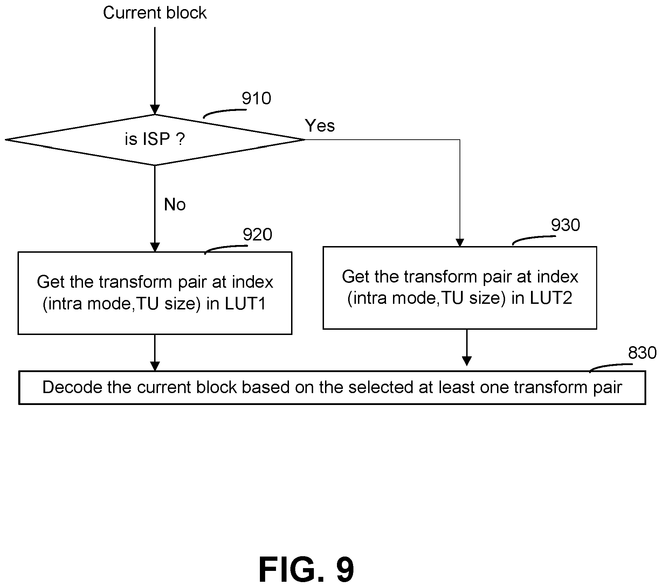

**FIG. 9** is a block diagram illustrating an example of a process (e.g., a decoder-side process) of mode-wise implicit MTS adapted to ISP according to another embodiment. In this embodiment, ISP blocks have a dedicated implicit MTS LUT to infer the transform, e.g., based on the block size (TU size) and intra mode or based on the size index and intra mode. Therefore, if the block is non-ISP (910), the at least one transform pair is inferred (e.g., selected) based on its TU size (either directly or indirectly using sizeIdx) and intra mode from a first look-up table LUT1 (920). If the block is an ISP coded block (910) the at least one transform pair is inferred based on its TU size (either directly or indirectly using sizeIdx) and intra mode from a second first look-up table LUT2 dedicated to ISP coded blocks (930). LUT1 and LUT2 may be different.

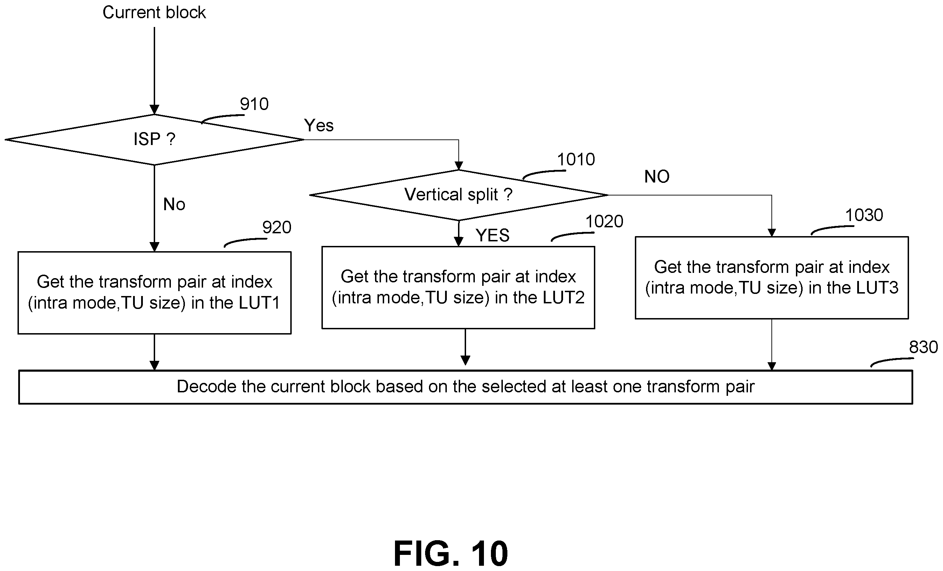

In ISP mode, a CU may be split into several horizontal or vertical sub-partitions as illustrated on FIGs 4 and 5. This can lead to different characteristics of residual depending on the type of split, i.e., vertical or horizontal. To tackle this, in an embodiment illustrated on **FIG. 10,** two different LUTs (e.g., LUT2 and LUT3) are considered for ISP blocks, one for horizontal ISP splits and one for vertical ISP splits. Therefore, the decoder may first decode the type of ISP split and the transform type may be inferred (e.g., selected or derived) from the corresponding LUT based on the TU size (or size index) and intra mode of the current block. In particular, in a case where it is determined that current block is an ISP coded block, it is determined whether it is vertically split (1010). If it is the case, the at least one transform pair is inferred based on its TU size (or size index) and intra mode from LUT2 (1020). Otherwise (horizontal split), the at least one transform pair is inferred based on its TU size (or size index) and intra mode from LUT3 (1030). LUT2 and LUT3 may be different.

In another example, it is proposed to adapt the transform pair inferred by the LUT in mode-wise LUT-based implicit MTS based on the position of the ISP sub-partition within the CU. As mentioned previously, the reference area used to generate the prediction of ISP sub-partitions contains the top and/or left reference pixels of the CU and the reconstructed pixels from the previously reconstructed adjacent ISP sub-partition, if available. If the length of the ISP sub-partitions is less than (e.g., strictly less than) 4 samples in the direction of the ISP split, the prediction of the current ISP sub-partition may be generated from a group with a minimum length of 4 samples of previously reconstructed ISP sub-partitions, if available. In that case, some ISP sub-partitions in a group are not located at the border of the reference area, and the transform inferred by the LUT may not be adapted.

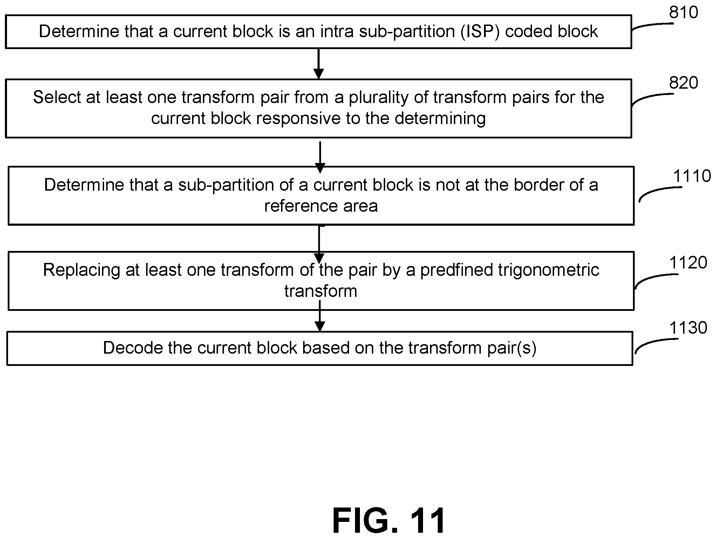

**FIG. 11** is a block diagram illustrating an example of a process (e.g., a decoder-side process) of mode-wise implicit MTS adapted to ISP according to another embodiment. In this embodiment, it is proposed to adapt the transform pair inferred by the LUT in LUT-based implicit MTS based on the position of the ISP sub-partition within the CU.

A transform pair is selected for the current block, e.g. by applying (810) and (820). Then, it is determined that a current sub-partition is not at the border of a reference area (e.g., a reference area comprising samples used for intra prediction) (1110), e.g., at least in the direction of the split. The transform of the transform pair in the opposite direction of the ISP split is replaced by a predefined trigonometric transform, e.g., by a DCT2 (1120). The other transform of the transform pair remains unchanged. In an example, a transform pair may be obtained for the current block (e.g., for all sub-partitions of the current block) by any of the method depicted on FIGs 8 to 10, and a transform of the transform pair may be replaced (e.g., in the opposite direction of the ISP split ) by the predefined trigonometric transform, e.g., by a DCT2, for a sub-partition that is not at the border of a reference area. The current block is then decoded based on the transform pairs selected for the current block (1130). More precisely, each sub-partition of the current block is decoded based on the transform pair selected for that sub-partition. Indeed, in the present example, different sub-partitions may use different transform pairs.

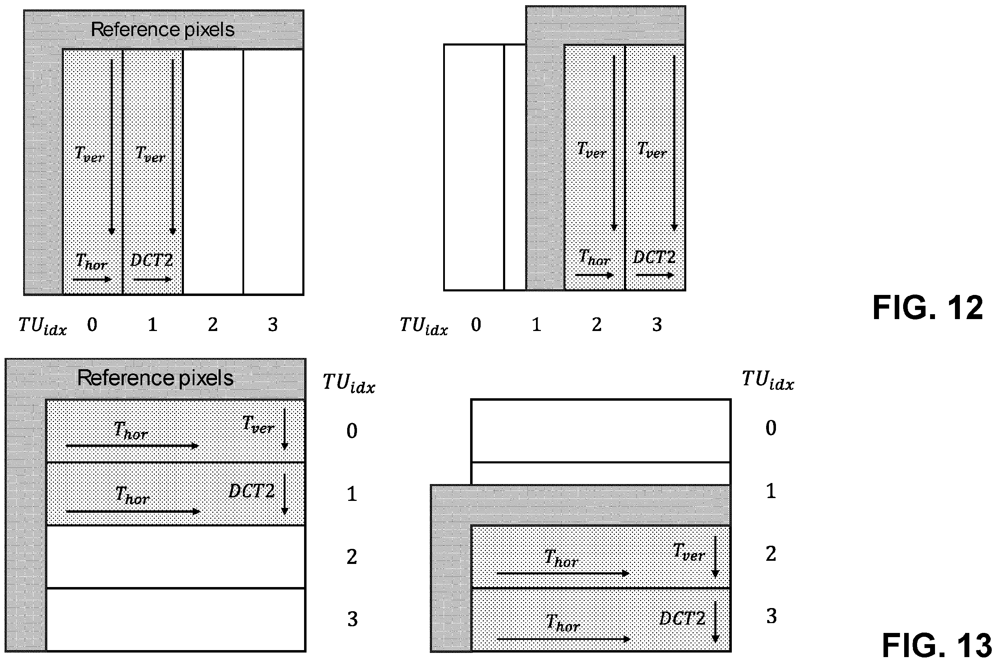

This variant is illustrated in **FIG. 12** and **FIG. 13,** where the grey-dotted sub-partitions represent the ISP sub-partitions predicted from a same reference area. In these examples, the ISP sub-partitions of indices ($TU_{idx}$) 0 and 2 use the transforms inferred by the LUT, i.e., $T_{hor}$ and $T_{ver}$, while the ISP sub-partitions of indices 1 and 3 use by the predefined trigonometric transform in the opposite direction of the ISP split. Indeed, while the ISP sub-partitions of indices 0 and 2 are at the border of the reference area, i.e., their left and top borders are adjacent to the reference area, ISP sub-partitions of indices 1 and 3 are not (at least in the direction of the split), i.e. their left border are not at the border of the reference area.

In another example, if an ISP sub-partition is not at the border of the reference area, by the predefined trigonometric transform is used for this ISP sub-partition in both directions, i.e., $T_{hor}$ and $T_{ver}$ are both replaced by by the predefined trigonometric transform (e.g., DCT2).

In yet another example, if an ISP sub-partition is not at the border of the reference area, the default implicit MTS method may used to infer (e.g., select/derived) a transform pair for this ISP sub-partition. The default implicit MTS method may be defined as follows: if the ISP sub-partition height or width is between 4 and 16, the vertical or horizontal transform is set to DST7, respectively. Otherwise DCT2 is selected.

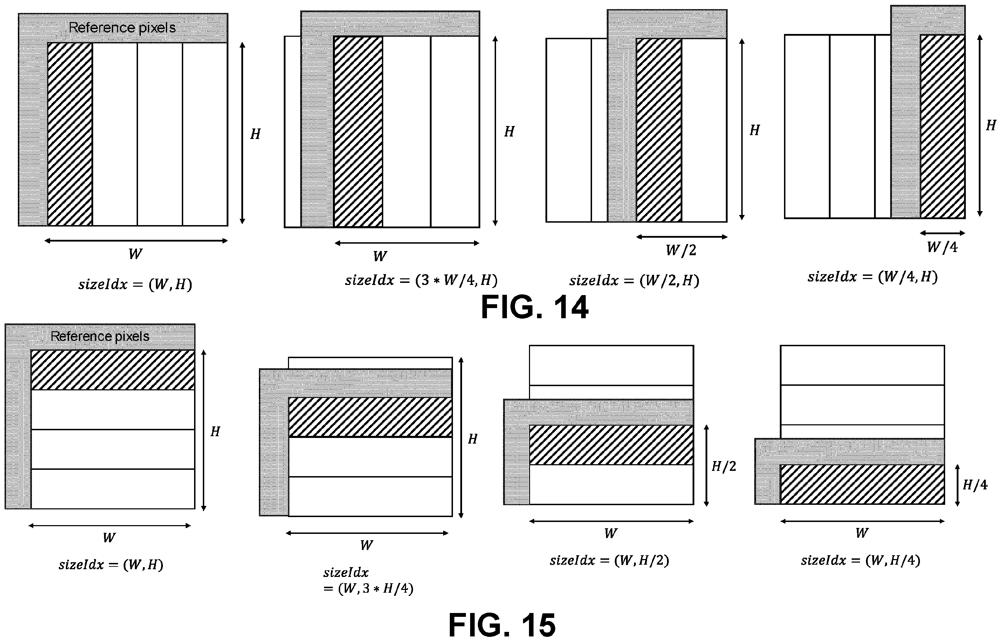

To obtain a transform pair from a LUT, both a size index (*sizeIdx*) and an intra mode index (*modeIdx*) may be used. The sizeIdx may be obtained by mapping the size of the block (e.g., a TU size) to an index, e.g., using the Table 2. In ISP mode, the size of the prediction area may be dependent on the position of the current sub-partition within the CU as illustrated on FIGs 14 and 15. The prediction area is the area in the block that is predicted.

In an embodiment, it is proposed to adapt the index *sizeIdx* used as input to an Implicit MTS LUT. This embodiment may be combined with any of the embodiments described previously with reference to FIGs 8 to 13. In an example, the sizeIdx may be based on the CU size (instead of the TU size) for all sub-partitions within an ISP block. In another example, the sizeIdx may be based on the ISP sub-partition size for all sub-partitions within an ISP block. In another example, the sizeIdx may be based on the CU size for all sub-partitions within an ISP block except the last sub-partition which may use the ISP sub-partition size to obtain the sizeIdx.

In another example, the index *sizeIdx* may adapted based on the position of the ISP sub-partition within the CU. This embodiment may be combined with any of the embodiments described previously with reference to FIGs 8 to 13. As mentioned previously, for each sub-partition, the reconstructed samples are obtained by adding the residual signal to the prediction signal of previously decoded ISP sub-partitions. Hence, the characteristic (e.g., shape or size) of the prediction area is dependent on the position of the ISP sub-partition being processed (current ISP sub-partition). Hence, the horizontal and vertical primary transforms inferred by the implicit MTS LUT may not be adapted to every ISP sub-partitions.

To this aim, special rules may be applied to infer the *sizeIdx* based on the ISP sub-partition position within the CU as illustrated on **FIG. 14** and **FIG. 15.** In these figures, the dashed block corresponds to the current ISP sub-partitions and the double arrows show the width and height of the prediction area. In FIG. 14, the sub-partition index goes from 0 to 3 from the left to the right, and in FIG. 15, the sub-partition index goes from 0 to 3 from the top to the bottom. *W* and *H* denoting the width and the height of the current CU, respectively, *sizeIdx* is obtained as follows :

- *W* and *H* if the ISP sub-partition index is 0.
- 3 * *W*/4 and *H* if the ISP sub-partition index is 1 and the ISP split mode is vertical.
- *W*/2 and *H* if the ISP sub-partition index is 2 and the ISP split mode is vertical.
- *W*/4 and *H* if the ISP sub-partition index is 3 and the ISP split mode is vertical.
- *W* and 3 * *H*/4 if the ISP sub-partition index is 1 and the ISP split mode is horizontal.
- *W* and *H*/2 if the ISP sub-partition index is 2 and the ISP split mode is horizontal.
- W and *H*/4 if the ISP sub-partition index is 3 and the ISP split mode is horizontal.

In this example, sizeIdx bins corresponding to sizes $W \times (3*H/4)$ and $(3*W/4) \times H$ are used for the ISP sub-partition of index 1 if the ISP split mode is horizontal and vertical, respectively. These bins correspond to the size of the prediction area of the ISP sub-partitions of index 1.

In yet another example, the rules are modified and *sizeIdx* is obtained as follows :

- *W* and *H* if the ISP sub-partition index is 0 or 1.
- *W*/2 and *H* if the ISP sub-partition index is 2 and the ISP split mode is vertical.
- *W*/4 and *H* if the ISP sub-partition index is 3 and the ISP split mode is vertical.
- *W* and *H*/2 if the ISP sub-partition index is 2 and the ISP split mode is horizontal.
- *W* and *H*/4 if the ISP sub-partition index is 3 and the ISP split mode is horizontal.

More generally, the *sizeIdx* is obtained from the size of the current ISP prediction area, if available in the LUT. If the size of the ISP prediction area is not available in the LUT, the size of prediction area obtained from the previous ISP sub-partition may be used to obtain the *sizeIdx*. This is the case for example for the sub-partition of index 1 whose size of the ISP prediction area is 3*W/4 (on FIG. 14). If this size is not present in the LUT, the size of prediction area obtained from the previous ISP sub-partition, i.e. from the sub-partition of index 0, may be used to obtain the *sizeIdx* for this sub-partition.

In another variant, a different LUT per ISP sub-partition position may be used. In this variant, the *sizeIdx* may be obtained from the size of the CU or the size of the ISP sub-partition.

The embodiments described on the decoder side may apply similarly on the encoder side.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of decoding comprising:

   determining that a current block is an intra sub-partition (ISP) coded block ;
   selecting, for a current block, at least one transform pair from a plurality of transform pairs for the current block responsive to the determining; and
   decoding the current block based on the selected at least one transform pair.

2. A decoding device comprising one or more processors and at least one memory coupled to said one or more processors, wherein said one or more processors are configured to perform :

determining that a current block is an intra sub-partition (ISP) coded block ;
selecting, for a current block, at least one transform pair from a plurality of transform pairs for the current block responsive to the determining; and
decoding the current block based on the selected at least one transform pair.

3. The method of claim 1 or the device of claim 2, wherein selecting, for a current block, at least one transform pair from a plurality of transform pairs responsive to the determining comprises selecting the at least one transform pair based on a look up table mapping prediction modes and transform unit sizes with transform pairs, said look up table used for the current block being different from a look-up table used for a non-ISP coded block.

4. The method of claim 1 or 3 or the device of claim 2 or 3, wherein selecting, for a current block, at least one transform pair from a plurality of transform pairs responsive to the determining comprises selecting the at least one transform pair based on a look up table mapping prediction modes and transform unit sizes with transform pairs, wherein the look-up table used for an ISP coded block split vertically is different from the look-up table for an ISP coded block split horizontally.

5. The method of any one of claims 1, 3 or 4 or the device of any one of claims 2 to 4, wherein selecting, for a current block, at least one transform pair from a plurality of transform pairs responsive to the determining comprises adapting the selected the transform pair for at least one sub-partition of the current block based on a position of the sub-partition in the current block.

6. The method of claim 5 or the device of claim 5, wherein, for a sub-partition not located at a border of a reference area, adapting the selected at least one transform pair based on a position of the sub-partition in the current block comprises replacing a transform of the transform pair by a predefined trigonometric transform in an opposite direction of an ISP split or replacing both transforms of the transform pair by a predefined trigonometric transform.

7. The method of any one of claims 3 to 6 or the device of any one of claims 3 to 6, wherein selecting the at least one transform pair based on a look up table mapping prediction modes and transform unit sizes with transform pairs comprises:

   obtaining a size index for each sub-partition of the current block based on a position of the sub-partition within the current block; and
   selecting the at least one transform pair for each sub-partition based on the size index obtained for the sub-partition.

8. A method of encoding comprising:

   determining that a current block is an intra sub-partition (ISP) coded block ;
   selecting, for a current block, at least one transform pair from a plurality of transform pairs for the current block responsive to the determining; and
   encoding the current block based on the selected at least one transform pair.

9. An encoding device comprising one or more processors and at least one memory coupled to said one or more processors, wherein said one or more processors are configured to perform :

   determining that a current block is an intra sub-partition (ISP) coded block ;
   selecting, for a current block, at least one transform pair from a plurality of transform pairs for the current block responsive to the determining; and
   encoding the current block based on the selected at least one transform pair.

10. The method of claim 8 or the device of claim 9, wherein selecting, for a current block, at least one transform pair from a plurality of transform pairs responsive to the determining comprises selecting the at least one transform pair based on a look up table mapping prediction modes and transform unit sizes with transform pairs, said look up table used for the current block being different from a look-up table used for a non-ISP coded block.

11. The method of claim 8 or 10 or the device of claim 9 or 10, wherein selecting, for a current block, at least one transform pair from a plurality of transform pairs responsive to the determining comprises selecting the at least one transform pair based on a look up table mapping prediction modes and transform unit sizes with transform pairs, wherein the look-up table used for an ISP coded block split vertically is different from the look-up table for an ISP coded block split horizontally.

12. The method of any one of claims 8, 10 or 11 or the device of any one of claims 9 to 11, wherein selecting, for a current block, at least one transform pair from a plurality of transform pairs responsive to the determining comprises adapting the selected the transform pair for at least one sub-partition of the current block based on a position of the sub-partition in the current block.

13. The method of claim 12 or the device of claim 12, wherein, for a sub-partition not located at a border of a reference area, adapting the selected at least one transform pair based on a position of the sub-partition in the current block comprises replacing a transform of the transform pair by a predefined trigonometric transform in an opposite direction of an ISP split or replacing both transforms of the transform pair by a predefined trigonometric transform.

14. The method of any one of claims 10 to 13 or the device of any one of claims 10 to 13, wherein selecting the at least one transform pair based on a look up table mapping prediction modes and transform unit sizes with transform pairs comprises:

> obtaining a size index for each sub-partition of the current block based on a position of the sub-partition within the current block; and
> selecting the at least one transform pair for each sub-partition based on the size index obtained for the sub-partition.

15. A signal comprising video data, formed by performing the method of any one of claims 8 and 10-14.

16. A computer readable storage medium having stored thereon instructions for decoding according to the method of any one of claims 1 and 3-7 or for encoding according to the method of any one of claims 8 and 10-14.

**FIG. 1**

EP 4 727 121 A1

**FIG. 2**

FIG. 3

**FIG. 4**

Original HxW partition

Horizontal

Vertical

W

H/2

W/2

H

**FIG. 5**

Original HxW partition

Horizontal

Vertical

W

H/4

W/4

H

FIG. 6

EP 4 727 121 A1

EP 4 727 121 A1

| Obtain the transformed coefficients | — 710 |

| Get the transform pair at index (intra mode,TU size) in the LUT | — 720 |

| Apply inverse transform | — 730 |

Reconstructed the residuals

# FIG. 7

EP 4 727 121 A1

Determine that a current block is an intra sub-partition (ISP) coded block — 810

Select at least one transform pair from a plurality of transform pairs for the current block responsive to the determining — 820

Decode the current block based on the selected at least one transform pair — 830

# FIG. 8

Current block

EP 4 727 121 A1

910

is ISP ?

Yes

No

920

Get the transform pair at index
(intra mode,TU size) in LUT1

930

Get the transform pair at index
(intra mode,TU size) in LUT2

830

Decode the current block based on the selected at least one transform pair

FIG. 9

Current block

910

ISP ? → Yes

No

1010

Vertical split ? → NO

YES

920
Get the transform pair at index (intra mode,TU size) in the LUT1

1020
Get the transform pair at index (intra mode,TU size) in the LUT2

1030
Get the transform pair at index (intra mode,TU size) in the LUT3

830
Decode the current block based on the selected at least one transform pair

**FIG. 10**

```
┌──────────────────────────────────────────────────────────────────────┐   ┌ 810
│      Determine that a current block is an intra sub-partition (ISP) coded block      │──┤
└──────────────────────────────────────────────────────────────────────┘
                                     │
                                     ▼
┌──────────────────────────────────────────────────────────────────────┐   ┌ 820
│      Select at least one transform pair from a plurality of transform pairs for the   │──┤
│              current block responsive to the determining               │
└──────────────────────────────────────────────────────────────────────┘
                                     │
                                     ▼
┌──────────────────────────────────────────────────────────────────────┐   ┌ 1110
│      Determine that a sub-partition of a current block is not at the border of a     │──┤
│                           reference area                            │
└──────────────────────────────────────────────────────────────────────┘
                                     │
                                     ▼
┌──────────────────────────────────────────────────────────────────────┐   ┌ 1120
│      Replacing at least one transform of the pair by a predfined trigonometric      │──┤
│                            transform                            │
└──────────────────────────────────────────────────────────────────────┘
                                     │
                                     ▼
┌──────────────────────────────────────────────────────────────────────┐   ┌ 1130
│              Decode the current block based on the transform pair(s)              │──┤
└──────────────────────────────────────────────────────────────────────┘
```

# FIG. 11

Reference pixels

$T_{ver}$  $T_{ver}$

$T_{hor}$  DCT2

$TU_{idx}$  0  1  2  3

$T_{ver}$  $T_{ver}$

$T_{hor}$  DCT2

$TU_{idx}$  0  1  2  3

**FIG. 12**

Reference pixels

$TU_{idx}$

$T_{hor}$  $T_{ver}$  0

$T_{hor}$  DCT2  1

2

3

$TU_{idx}$

0

1

$T_{hor}$  $T_{ver}$  2

$T_{hor}$  DCT2  3

**FIG. 13**

$sizeIdx = (W, H)$     $sizeIdx = (3 * W/4, H)$     $sizeIdx = (W/2, H)$     $sizeIdx = (W/4, H)$

# FIG. 14

$sizeIdx = (W, H)$     $sizeIdx = (W, 3 * H/4)$     $sizeIdx = (W, H/2)$     $sizeIdx = (W, H/4)$

# FIG. 15

**EUROPEAN SEARCH REPORT**

| | Application Number |
|---|---|
| | EP 24 30 6649 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J-R OHM: "Meeting Report of the 35th JVET Meeting", 147. MPEG MEETING; 20240715 - 20240719; SAPPORO; (MOTION PICTURE EXPERT GROUP OR ISO/IEC JTC1/SC29/WG11), , no. m69391 16 August 2024 (2024-08-16), XP030323373, Retrieved from the Internet: URL:https://dms.mpeg.expert/doc_end_user/documents/147_Sapporo/wg11/m69391-JVET-AI1000-v1-JVET-AI1000-v1.zip JVET-AI1000-v1.docx [retrieved on 2024-08-16] * the whole document * ----- | 1-16 | INV. H04N19/119 H04N19/12 H04N19/122 H04N19/176 |
| X | BONNINEAU (INTERDIGITAL) C ET AL: "AHG12: Improved implicit MTS", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0223 15 July 2024 (2024-07-15), XP030320607, Retrieved from the Internet: URL:https://jvet-experts.org/doc_end_user/documents/35_Sapporo/wg11/JVET-AI0223-v3.zip JVET-AI0223-v3.docx [retrieved on 2024-07-15] * the whole document * ----- | 1-16 | |
| | | | TECHNICAL FIELDS SEARCHED (IPC) |
| | | | H04N |

-/--

The present search report has been drawn up for all claims

| Place of search | Date of completion of the search | Examiner |
|---|---|---|
| Munich | 19 March 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

| | Application Number |
|---|---|
| | **EP 24 30 6649** |

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARAM NASER ET AL: "Non-CE6: Shape Adaptive Transform Selection for ISP, SBT and MTS", 14. JVET MEETING; 20190319 - 20190327; GENEVA; (THE JOINT VIDEO EXPLORATION TEAM OF ISO/IEC JTC1/SC29/WG11 AND ITU-T SG.16 ), , no. JVET-N0388; JVET-N0388 12 March 2019 (2019-03-12), pages 1-4, XP030202776, Retrieved from the Internet: URL:http://phenix.int-evry.fr/jvet/doc_end _user/documents/14_Geneva/wg11/JVET-N0388-v1.zip JVET-N0388.docx [retrieved on 2019-03-12] * the whole document * ----- | 5,6,12,13 | |
| | | | TECHNICAL FIELDS SEARCHED (IPC) |

The present search report has been drawn up for all claims

| Place of search | Date of completion of the search | Examiner |
|---|---|---|
| Munich | 19 March 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

page 2 of 2